# DEMANDE DE BREVET EUROPEEN

(11) **EP 0 931 710 A1**
(43) Date de publication de la demande: **28.07.1999**
(21) Numéro de dépôt: 99460003.9
(22) Date de dépôt: 19.01.1999
(51) Int. Cl.: B62B 7/06, B62B 7/14

(54) **Poussette pour enfant, à hamac allongeable télescopique, et hamac correspondant**

(30) Priorité: 21.01.1998 FR 9800820
(71) Demandeur: Ampafrance S.A., 49309 Cholet Cedex (FR)
(72) Inventeur: Bigo, M. Jean, 49300 Cholet (FR); Ageneau, M. Laurent, 49300 Cholet (FR)
(74) Mandataire: Vidon, Patrice

(57) **Abrégé**

L'invention concerne une poussette pour enfant, du type comprenant un hamac inclinable monté sur un châssis de poussette, ledit hamac présentant une armature (22, 25) supportant un siège, ladite armature étant formée de deux parties, une partie supérieure (25) et une partie inférieure (22), ladite partie supérieure (25) pouvant coulisser par rapport à ladite partie inférieure (22), de façon que la longueur maximale de ladite armature puisse varier entre deux longueurs extrêmes, pour permettre la modification de l'angle d'assise dudit siège. Selon l'invention, ledit hamac comprend, sur chacun de ces côtés, une pièce de guidage (15) solidaire de l'une desdites parties de l'armature (22) et présentant une lumière oblongue (23) dans laquelle circule un ergot de guidage (24) solidaire de l'autre partie de l'armature (25), le déplacement dudit ergot de guidage (24) dans ladite lumière oblongue (23) permettant de contrôler ladite longueur de l'armature et l'inclinaison dudit hamac.

## Description

Le domaine de l'invention est celui de la puériculture, et en particulier des poussettes pour enfant. Plus précisément, l'invention concerne une poussette pour enfant dont le hamac est inclinable et présente un angle d'assise variable en fonction de son inclinaison.

On connaît déjà de nombreuses poussettes à hamac, ou nacelle, inclinables. Classiquement, le hamac est monté sur le châssis de la poussette. Divers moyens sont prévus, sur le châssis, pour guider, mettre en place et maintenir en position le hamac dans la position souhaitée.

Une amélioration connue consiste à faire varier l'angle d'ouverture de l'assise du hamac, en fonction de son inclinaison. Ainsi, lorsque le hamac est dans une position sensiblement droite (position assise), l'angle de l'assise (angle formé par l'élément d'assise et l'élément de dossier du hamac) de l'ordre de 110°, de façon à former un fauteuil, avec dossier. Inversement, lorsque le hamac est en position allongée, l'angle formé par l'assise du hamac s'ouvre fortement (de l'ordre de 160°). Ainsi, l'enfant est confortablement assis lorsque le hamac est en position assise, et allongé, lorsque le hamac est en position allongée. Des positions intermédiaires peuvent bien sûr être prévues.

Pour obtenir ce résultat, le hamac présente, vu de côté, une structure en triangle déformable. L'hypoténuse de ce triangle est formée par l'armature du hamac. Les deux autres côtés (partie d'assise et partie de dossier) sont deux éléments de rigidification (classiquement des planchettes en matière plastique) articulés à leur sommet commun. L'armature est conçue de façon que sa longueur puisse varier. Les variations de cette longueur entraîne automatiquement l'ouverture ou la fermeture de l'angle formé par la partie d'assise et la partie de dossier.

Plus précisément, en position assise, l'armature présente sa longueur minimale, et en position allongée, sa longueur maximale. Pour cela, l'armature est conçue en deux parties, une partie supérieure et une partie inférieure, la partie supérieure pouvant télescopiquement pénétrer dans une portion de la partie inférieure.

Le maintien du hamac dans une inclinaison donnée, et avec l'ouverture de l'angle d'assise voulue, est assuré par l'intermédiaire d'un jeu de biellettes solidaires du châssis de la poussette. Ce mécanisme est relativement complexe, tant en ce qui concerne son montage, lors de la fabrication de la poussette, que son utilisation. Il s'avère notamment très peu pratique dans le cas où le hamac est prévu pour pouvoir être utilisé alternativement en position assis face à la route et en position assis face à la mère. En effet, dans ce cas il est tout d'abord nécessaire d'agir sur le châssis, pour que les biellettes se mettent dans la position voulue, puis de retourner le hamac (après l'avoir désolidarisé du châssis), et enfin de le remettre en place dans la position voulue.

Plus généralement, les systèmes connus présentent des inconvénients nombreux, tant en ce qui concerne leur fabrication :
- nombre de pièces mobiles important ;
- temps de montage important,
qu'en ce qui concerne son utilisation :
- manipulation peu aisée ;
- difficultés en cas de hamac réversible (position face à la route et position face à la mère) ;
- problèmes de sécurité, dus au fait que l'enfant peut agir sur les éléments de réglage de l'inclinaison.

L'invention a notamment pour objectif de pallier ces différents inconvénients de l'état de l'art.

Plus précisément, un premier objectif de l'invention est de fournir une poussette pour enfant, à hamac inclinable et angle d'ouverture de l'assise variable, qui soit d'un usage aisé, par rapport aux techniques connues.

Notamment, un objectif de l'invention est de fournir une telle poussette, dont le hamac puisse aisément désolidarisé au châssis de la poussette et solidarisé à nouveua à ce châssis.

Un autre objectif de l'invention est de fournir une telle poussette, dont le hamac puisse être mis dans la position voulue de façon simple et sûre, de préférence par une personne restant à l'arrière de la poussette, et sans que l'enfant puisse lui-même interagir sur cette position.

Dans un mode de réalisation particulier, un autre objectif de l'invention est de fournir une telle poussette, dont le hamac est réversible, sans manipulations lourdes et complexes.

Un autre objectif de l'invention est de fournir une telle poussette, dont le coût de revient est abaissé, par rapport aux poussettes classiques du même type. Plus précisément, l'invention a pour objectif de fournir une telle poussette, dont les coûts de fabrication ainsi que les coûts de montage sont réduits. En particulier, un objectif de l'invention est de fournir une telle poussette dont l'inclinaison et le contrôle de l'angle de l'assise sont assurés par un nombre de pièces réduit.

Un autre objectif particulier de l'invention est de fournir une telle poussette facilitant l'usage d'équipements optionnels solidaires du hamac.

L'invention concerne une poussette pour enfant, du type comprenant un hamac inclinable monté sur un châssis de poussette, ledit hamac présentant une armature supportant un siège, ladite armature étant formée de deux parties, une partie supérieure et une partie inférieure, ladite partie supérieure pouvant coulisser par rapport à ladite partie inférieure, de façon que la longueur maximale de ladite armature puisse varier entre deux longueurs extrêmes, pour permettre la modification de l'angle d'assise dudit siège.

Les objectifs ci-dessus, ainsi que d'autres qui apparaîtront par la suite, sont atteints selon l'invention par un tel hamac comprenant, sur chacun de ces côtés, une pièce de guidage solidaire de l'une desdites parties de l'armature et présentant une lumière oblongue dans laquelle circule un ergot de guidage solidaire de l'autre partie de l'armature, le déplacement dudit ergot de guidage dans ladite lumière oblongue permettant de contrôler ladite longueur de l'armature et l'inclinaison dudit hamac.

Ainsi, les moyens assurant et contrôlant le positionnement et l'ouverture de l'angle de l'assise sont uniquement solidaires du hamac (et donc indépendants du châssis). La pièce de guidage est monobloc, et peut aisément être fabriqué et monté sur la poussette. Le coût de fabrication est donc réduit, par rapport aux techniques connues.

De façon avantageuse, ladite lumière oblongue présente un profil sensiblement en arc de cercle. Cette forme permet d'obtenir une ouverture de l'angle d'assise sensiblement proportionnelle à l'inclinaison du hamac.

Selon un mode de réalisation particulier de l'invention, ledit ergot de guidage est solidaire de ladite partie supérieure. Ce mode de réalisation est plus précisément décrit par la suite. Rien n'empêche, cependant, que les rôles des parties supérieure et inférieure soient inversées.

Avantageusement, chacune desdites pièces de guidage présente au moins deux crans d'arrêt, coopérant avec un ergot d'arrêt solidaire de la partie de ladite armature portant ledit ergot de guidage, chacun desdits crans d'arrêt correspondant à une position stable d'inclinaison dudit hamac.

Divers autres modes de verrouillage dans la position d'inclinaison voulue sont bien sûr envisageable. A titre d'exemple, on peut prévoir un blocage par serrage de l'ergot de guidage dans ladite lumière.

Selon un mode de réalisation préférentiel de l'invention, lesdits ergots d'arrêt sont libérés sous l'effet d'une pièce de commande unique, des moyens de rappel ramenant automatiquement lesdits ergots en position de verrouillage. Il est bien sûr également possible de prévoir deux pièces de commande distinctes, associées chacune à l'une desdites pièces de guidage.

De façon avantageuse, lorsqu'une pièce de commande unique est mise en oeuvre, celle-ci suit sensiblement ladite partie supérieure de l'armature, et présente une poignée d'actionnement dans sa portion horizontale.

Ainsi, il est possible d'incliner le hamac d'une seule main, tout en restant à l'arrière de la poussette (face au guidon de la poussette).

Avantageusement, lesdites pièces de guidage coopèrent avec des moyens de fixation dudit hamac audit châssis. De cette façon, il est aisé de mettre en place et de solidariser ou désolidariser le hamac et le châssis, sans qu'aucune pièce extérieure ne soit nécessaire.

De façon préférentielle, ledit hamac peut être monté dans deux sens sur ledit châssis, de façon à offrir une position face à la route et une position face à la mère. Il peut par exemple s'agir d'un hamace du type de celui décrit dans le document de brevet FR-96 11035, au nom du même déposant que la présente demande. Il est ainsi aisé de passer de l'un à l'autre mode, en séparant le hamac du châssis, puis en le remettant en place. Aucune autre opération n'est nécessaire.

Selon un mode de réalisation avantageux de l'invention, lesdites pièces de guidage comprennent des moyens de fixation d'au moins un équipement optionnel, tel qu'un arceau de maintien, un parasol, un canopy...

L'invention concerne également en tant que tel un hamac tel que décrit ci-dessus.

D'autres caractéristiques et avantages de l'invention apparaîtront plus précisément à la lecture de la description suivante d'un mode de réalisation préférentiel de l'invention, donné à titre de simple exemple illustratif et non limitatif, et des dessins annexés, parmi lesquels :
- la figure 1 présente, vue de côté, une poussette selon l'invention ;
- la figure 2 illustre les quatre positions stables que peut prendre le hamac dela poussette de la figure 1 ;
- la figure 3 présente, vue de côté, la pièce de guidage équipant le hamac de la figure 2.

Comme mentionné plus haut, l'invention concerne donc une poussette à hamac inclinable dont l'angle formé par l'assise est variable en fonction de l'inclinaison. Selon l'invention, le contrôle de l'inclinaison et l'ouverture de l'angle d'assise est assuré par une pièce unique, de chaque côté du hamac, et totalement indépendante du châssis. En d'autres termes, aucune pièce mobile solidaire du châssis n'est nécessaire pour assurer ces fonctions. Les deux pièces de guidage sont montées et maintenues de façon fixe sur le châssis.

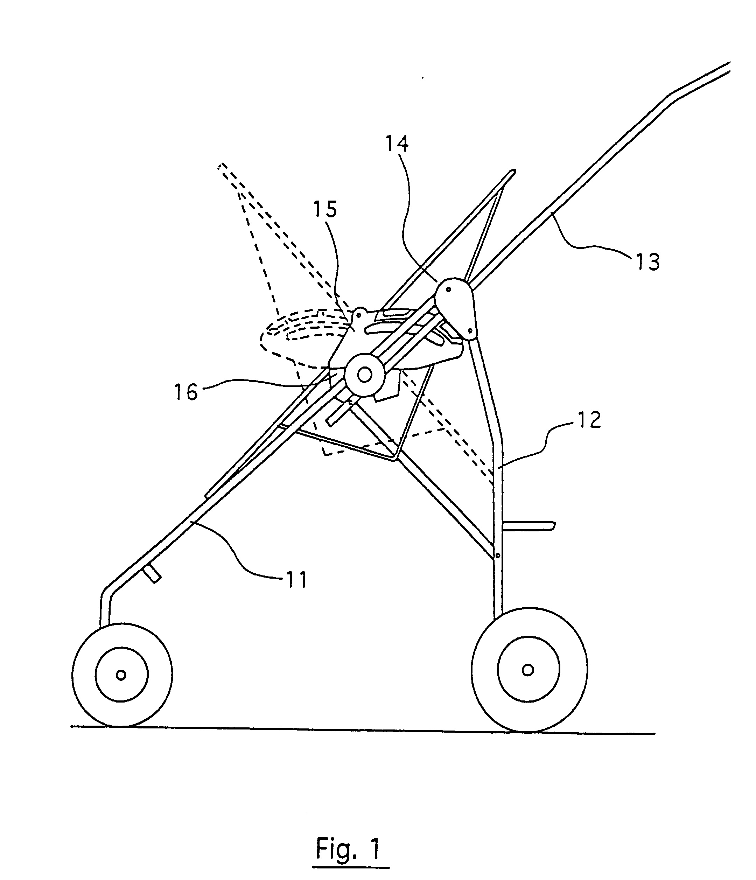

Une telle poussette est présentée en figure 1. Classiquement, le châssis comprend un piètement avant 11, un piètement arrière 12 et un bras poussoir 13. Le hamac 14 (représenté sans son habillage et son rembourrage, pour faciliter l'interprétation des desins) est maintenu sur le châssis par l'intermédiaire de ses pièces de guidage 15. Un système de blocage, par coopération avec un élément de réception 16 solidaire du châssis, permet de solidariser la pièce de guidage 15 au châssis.

Comme illustré en pointillé, le hamac est réversible. Il suffit pour cela de désolidariser les pièces de guidage du châssis, puis de retourner le hamac et remettre en place les pièces de guidage.

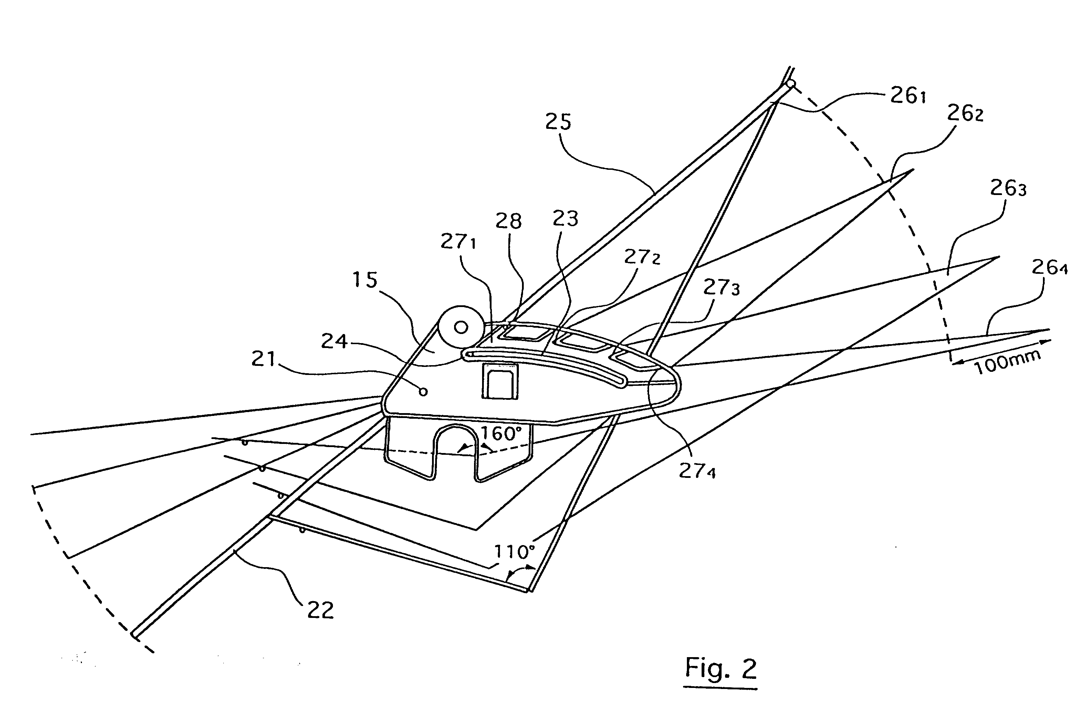

La figure 2 illustre le hamac de la figure 1. La pièce de guidage 15 présente un point de fixation 21 de la partie inférieure 22 de l'armature du hamac, autour duquel ce dernier peut pivoter. Il comprend par ailleurs une lumière oblongue 23, dans laquelle circule un ergot de guidage 24, monté sur la partie supérieure 25 de l'armature.

Entre les points 21 et 24, la partie supérieure 25 de l'armature peut coulisser à l'intérieur de la partie inférieure 22 de l'armature, de façon que la longueur entre les points 21 et 24 soit variable. Ainsi, entre la position assise 26₁ et la position allongée 26₄, cette longueur peut varier de la longueur de la lumière. Cela conduit à un allongement identique (de l'ordre de 100 mm par exemple) de la longueur totale de l'armature en position allongée 26₄, et donc à une grande ouverture (environ 160°) de l'assise du hamac.

Avantageusement, au moins une position intermédiaire 26₂, 26₃, peut être prévue.

Le contrôle de cet allongement est assuré par la lumière 23. Le maintien dans l'une des positions 26₁ à 26₄ peut être assuré par un système de crans d'arrêt 27₁ à 27₄. Ces crans sont définis dans la pièce de guidage 15. Un ergot d'arrêt 28 est prévu sur la partie supérieure 25 de l'armature.

Des moyens de rappel (non représentés) maintiennent en place cet ergot d'arrêt 28 dans l'un des crans d'arrêt 27₁ à 27₄, de façon à maintenir le hamac dans la position voulue 26₁ à 26₄. Pour changer de position, des moyens de commande (non représentés) sont prévus, pour sortir les ergots d'arrêt des crans d'arrêt, de chaque côté du hamac. Lorsque le hamac est dans la nouvelle position souhaitée, il suffit de relâcher les moyens de commande, pour que les ergots d'arrêt, sous l'effet de la force de rappel, s'enclenchent dans le cran d'arrêt correspondant.

Une commande distincte peut bien sûr être prévue pour chaque pièce de guidage. Toutefois, selon un mode de réalisation préférentiel, une commande unique est prévue, qui permet d'agir simultanément sur les deux ergots d'arrêt. Il peut en particulier s'agir d'une tige qui relie les deux ergots, derrière le hamac.

De façon avantageuse, cette tige est préformée de façon qu'elle suive sensiblement la partie supérieure 25 de l'armature, et définisse une poignée, au voisinage de la partie supérieure du hamac. Il suffit alors, pour modifier l'inclinaison du hamac, d'agir sur cette poignée, par un simple appui. Les manipulations sont ainsi particulièrement aisées, puisque la personne utilisant la poussette reste à l'arrière de celle-ci, dans la position classique de poussage (ou de tirage), et qu'elle peut agir d'une seule main sur la commande, et mettre le hamac dans la position voulue.

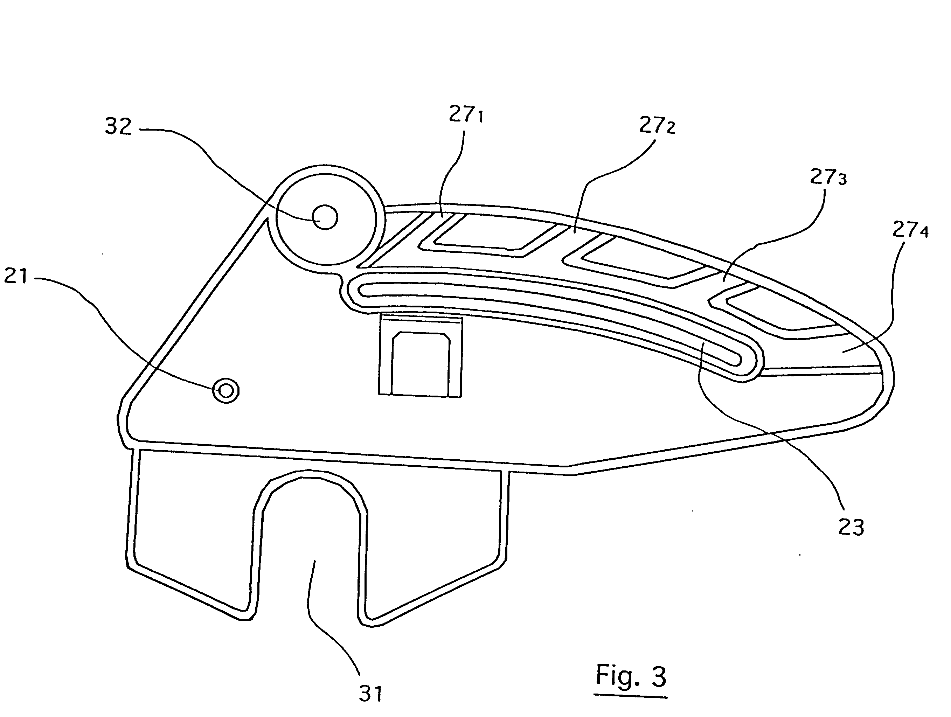

La figure 3 présente, de façon détaillée, une pièce de guidage selon l'invention. On constate aisément qu'il s'agit d'une pièce simple et peu coûteuse à fabriquer, par exemple par moulage dans une matière plastique adéquate.

Outre la lumière oblongue 23 et les crans d'arrêt 27₁ à 27₄ déjà commentés, on distingue sur cette pièce l'encoche de maintien 31, prévue pour coopérer avec un élément de réception et de fixation correspondant prévu sur le châssis de la poussette.

Un élément 32 de réception des moyens de fixation d'un arceau de maintien sont également prévus. De façon similaire, d'autres moyens pour recevoir et maintenir divers équipements optionnels peuvent être prévus. Ainsi, ils sont solidaires du hamac, et non du châssis, et sont donc systématiquement dans la bonne position, quelle que soit l'inclinaison du hamac.

Le mode de réalisation décrit ci-dessus n'est bien sûr pas limitatif de l'invention. Au contraire de nombreuses adaptations peuvent être envisagées. Par exemple, le profil de la lumière oblongue peut être modifié, le sens des crans d'arrêt peut être inversé (l'action sur la poignée de déverrouillage étant alors vers le haut et non plus vers le bas), le rôle des parties inférieures et supérieures de l'armature peuvent être inversées...

## Revendications

1. Poussette pour enfant, du type comprenant un hamac (14) inclinable monté sur un châssis de poussette, ledit hamac présentant une armature (22, 25) supportant un siège, ladite armature étant formée de deux parties, une partie supérieure (25) et une partie inférieure (22), ladite partie supérieure (25) pouvant coulisser par rapport à ladite partie inférieure (22), de façon que la longueur maximale de ladite armature puisse varier entre deux longueurs extrêmes, pour permettre la modification de l'angle d'assise dudit siège,
caractérisée en ce que ledit hamac (14) comprend, sur chacun de ces côtés, une pièce de guidage (15) solidaire de l'une desdites parties de l'armature (22) et présentant une lumière oblongue (23) dans laquelle circule un ergot de guidage (24) solidaire de l'autre partie de l'armature (25), le déplacement dudit ergot de guidage (24) dans ladite lumière oblongue (23) permettant de contrôler ladite longueur de l'armature et l'inclinaison dudit hamac.

2. Poussette selon la revendication 1, caractérisée en ce que ladite lumière oblongue (23) présente un profil sensiblement en arc de cercle.

3. Poussette selon l'une quelconque des revendications 1 et 2, caractérisée en ce que ledit ergot de guidage (24) est solidaire de ladite partie supérieure (25).

4. Poussette selon l'une quelconque des revendications 1 à 3, caractérisée en ce que chacune desdites pièces de guidage (15) présente au moins deux crans d'arrêt (27₁ à 27₄), coopérant avec un ergot d'arrêt (28) solidaire de la partie (25) de ladite armature portant ledit ergot de guidage (24), chacun desdits crans d'arrêt (27₁ à 27₄) correspondant à une position stable d'inclinaison dudit hamac.

5. Poussette selon la revendication 4, caractérisée en ce que lesdits ergots d'arrêt (27₁ à 27₄) sont libérés sous l'effet d'une pièce de commande unique, des moyens de rappel ramenant automatiquement lesdits ergots d'arrêt (27₁ à 27₄) en position de verrouillage.

6. Poussette selon la revendication 5, caractérisée en ce que ladite pièce de commande unique suit sensiblement ladite partie supérieure de l'armature (25), et présente une poignée d'actionnement dans sa portion horizontale.

7. Poussette selon l'une quelconque des revendications 1 à 6, caractérisée en ce que lesdites pièces de guidage (15) coopèrent avec des moyens de fixation (16) dudit hamac (14) audit châssis.

8. Poussette selon l'une quelconque des revendications 1 à 7, caractérisée en ce que ledit hamac (14) peut être monté dans deux sens sur ledit châssis, de façon à offrir une position face à la route et une position face à la mère.

9. Poussette selon l'une quelconque des revendications 1 à 8, caractérisée en ce que lesdites pièces de guidage (15) comprennent des moyens de fixation (32) d'au moins un équipement optionnel.

10. Hamac inclinable monté sur un châssis de poussette pour enfant, du type présentant une armature (22, 25) supportant un siège, ladite armature étant formée de deux parties, une partie supérieure (25) et une partie inférieure (22), ladite partie supérieure (25) pouvant coulisser par rapport à ladite partie inférieure (22), de façon que la longueur maximale de ladite armature puisse varier entre deux longueurs extrêmes, pour permettre la modification de l'angle d'assise dudit siège,
caractérisé en ce qu'il comprend, sur chacun de ces côtés, une pièce de guidage (15) solidaire de l'une desdites parties de l'armature (22) et présentant une lumière oblongue (23) dans laquelle circule un ergot de guidage (24) solidaire de l'autre partie de l'armature (25), le déplacement dudit ergot de guidage (24) dans ladite lumière oblongue (23) permettant de contrôler ladite longueur de l'armature et l'inclinaison dudit hamac.
